# EUROPEAN PATENT SPECIFICATION

(11) **EP 4 458 457 B1**
(45) Date of publication and mention of the grant of the patent: **08.10.2025**
(21) Application number: 23735213.3
(22) Date of filing: 09.03.2023
(51) Int. Cl.: B01F 23/53, B01F 25/50, B01F 27/80, B01F 35/21, H01M 4/04, B01F 23/50

(54) **SLURRY PROCESSING APPARATUS AND BATTERY PROCESSING DEVICE**
AUFSCHLÄMMUNGSVERARBEITUNGSVORRICHTUNG UND BATTERIEVERARBEITUNGSVORRICHTUNG
APPAREIL DE TRAITEMENT DE SUSPENSION ET DISPOSITIF DE TRAITEMENT DE BATTERIE

(30) Priority: 07.02.2023 CN 202320134187 U
(43) Date of publication of application: 06.11.2024
(73) Proprietor: Contemporary Amperex Technology (Hong Kong) Limited, Central, Central And Western District (HK)
(72) Inventor: YE, Fei, Ningde Fujian 352100 (CN); ZHONG, Guangcheng, Ningde Fujian 352100 (CN); SONG, Lei, Ningde Fujian 352100 (CN); TAO, Jinsong, Ningde Fujian 352100 (CN); CHI, Jianhua, Ningde Fujian 352100 (CN)
(74) Representative: Gong, Jinping
(86) International application number: PCT/CN2023/080478
(87) International publication number: WO 2024/164383

(56) References cited:
- CN-A- 105 561 858
- CN-A- 109 443 990
- CN-A- 110 085 452
- CN-A- 110 479 146
- CN-A- 110 479 146
- CN-A- 113 281 223
- CN-A- 113 281 223
- CN-U- 207 507 293
- CN-U- 207 507 293
- CN-U- 209 791 350
- CN-U- 209 791 350
- CN-U- 218 412 165
- CN-U- 218 412 165
- JP-A- S6 224 558
- JP-A- S6 224 558
- US-A1- 2022 158 158

## Description

This application claims priority to Chinese Patent Application No. 202320134187.9, filed on February 7, 2023 and entitled "SLURRY PROCESSING APPARATUS AND BATTERY PROCESSING DEVICE".

### TECHNICAL FIELD

This application relates to the battery processing field, and in particular, to a slurry processing apparatus as specified in any of claims 1-9, and a battery processing device as specified in claim 10.

### BACKGROUND

A large amount of powder needs to be used during battery processing. Before powder coating, the powder needs to be mixed with a solvent to form a slurry. Viscosity of the slurry affects adhesion of the slurry during coating. Therefore, when the viscosity of the slurry does not reach a preset standard, quality of a coated product is directly affected, further affecting quality of a battery. CN105561858A mentions an automatic adjustment of lithium battery paste. CN109443990 discloses an apparatus according to the preamble of claim 1.

### SUMMARY

The claimed subject-matter is defined by the appended claims. This application is mainly intended to propose a slurry processing apparatus for monitoring viscosity of a slurry during slurry processing, so as to alleviate a product quality problem caused because viscosity of a slurry produced by a slurry processing apparatus cannot reach a preset standard.

To achieve the foregoing objective, the slurry processing apparatus proposed in this application includes:
a slurry mixing assembly, configured to mix a slurry;
a viscosity monitoring assembly, configured to monitor a viscosity parameter of the slurry in the slurry mixing assembly;
a controller, separately connected to the slurry mixing assembly and the viscosity monitoring assembly, and configured to receive the viscosity parameter and control operation of the slurry mixing assembly based on the viscosity parameter; and
a suction pump, where the suction pump has an inlet, and the inlet of the suction pump is connected to the slurry mixing assembly through a first pipe for sucking the slurry in the slurry mixing assembly;
wherein the viscosity monitoring assembly is connected to the suction pump and is configured to monitor a viscosity parameter of a slurry sucked by the suction pump;
wherein the suction pump further has an outlet, and the outlet of the suction pump is connected to the slurry mixing assembly through a second pipe; and
wherein the slurry mixing assembly has a top wall, and an end of the second pipe away from the outlet of the suction pump is connected to the top wall of the slurry mixing assembly; the second pipe is provided above the suction pump, and the second pipe is connected to the slurry mixing assembly from above.

In this example, the slurry mixing assembly is used to mix the slurry, the viscosity monitoring assembly obtains the viscosity parameter of the slurry, the controller controls operation of the slurry mixing assembly based on the viscosity parameter, and when the viscosity parameter meets a preset standard, the controller triggers the slurry mixing assembly to stop mixing the slurry, or when the viscosity parameter does not reach the preset standard, the controller triggers the slurry mixing assembly to continue a slurry mixing operation. In this way, monitoring on the viscosity parameter of the slurry and online control on the slurry mixing assembly are implemented.

In this example, the slurry is sucked by the suction pump and monitored by the viscosity monitoring assembly. Therefore, the viscosity monitoring assembly does not need to be placed in the slurry mixing assembly, so that monitoring is performed while the slurry mixing assembly remains in a closed state. This facilitates sealing of the slurry mixing assembly, and reduces contamination caused by impurities entering the slurry mixing assembly.

In this example, the slurry sucked by the suction pump is conveyed back to the slurry mixing assembly through the second pipe, so that the slurry re-enters the slurry mixing assembly after detection is completed, to reduce a waste of the slurry. When it is detected that the viscosity parameter of the slurry does not reach the preset standard, the sucked slurry can be re-conveyed to the slurry mixing assembly to participate in mixing, to improve utilization of the slurry.

In some examples, the viscosity monitoring assembly is provided on the second pipe.

In this example, the viscosity monitoring assembly detects a slurry in the second pipe, and after the detection is completed, the slurry is conveyed back to the slurry mixing assembly along the second pipe, so that the slurry in the suction pump and the second pipe can be conveyed back to the slurry mixing assembly.

In this example, the second pipe is connected to the top wall of the slurry mixing assembly, so that the slurry output from the suction pump is conveyed back to the slurry mixing assembly. The slurry is input from the top of the slurry mixing assembly, so that the slurry can be fully mixed with raw materials in the slurry mixing assembly.

In some examples, the slurry processing apparatus further includes:
an output valve, connected to the slurry mixing assembly for outputting the slurry in the slurry mixing assembly to the outside of the slurry processing apparatus.

In this example, the output valve is configured to output the slurry, so that the output valve serves as a slurry output component of the slurry processing apparatus, to output the slurry in a preset direction.

In some examples, the controller is further connected to the output valve, and the controller is further configured to control operation of the output valve based on the viscosity parameter, so that the output valve outputs the slurry in the slurry mixing assembly to the outside of the slurry processing apparatus.

In this example, the controller is connected to the output valve, and the controller triggers opening and closing of the output valve. Therefore, when the viscosity parameter of the slurry meets the preset standard, the controller drives the output valve to open, to output the slurry to the outside of the slurry processing apparatus.

In some examples, the suction pump further has the outlet, and the output valve is connected to the suction pump; and
the output valve has a first connection position and a second connection position, and when the output valve is in the first connection position, the outlet of the suction pump is connected to the slurry mixing assembly through the output valve, or when the output valve is in the second connection position, the outlet of the suction pump communicates with the outside of the slurry processing apparatus through the output valve.

In this example, the controller controls the output valve. Therefore, when it is detected that the viscosity parameter of the slurry meets the preset standard, the output valve is controlled to output the slurry; or when the slurry does not reach the preset standard, the slurry is conveyed back to the slurry mixing assembly.

In some examples, the slurry mixing assembly has a bottom wall, and an end of the first pipe away from the inlet of the suction pump is connected to the bottom wall of the slurry mixing assembly.

In this example, the first pipe is connected to the bottom wall of the slurry mixing assembly, to suck the slurry from the bottom wall of the slurry mixing assembly, so as to reduce output resistance of the slurry.

In some examples, the slurry mixing assembly includes:
a stirring tank, configured to accommodate a slurry, where the stirring tank has an inlet; and
a stirring mechanism, provided in the stirring tank and configured to stir the slurry in the stirring tank, where
the viscosity monitoring assembly is configured to monitor a viscosity parameter of the slurry in the stirring tank, the controller is electrically connected to the stirring tank, and the controller controls an opening of the inlet based on the viscosity parameter.

In this example, raw materials of the slurry are input to the stirring tank, the stirring mechanism stirs the slurry to evenly mix the slurry, and the viscosity monitoring assembly detects whether the stirred slurry meets the preset viscosity standard. When the slurry does not reach the preset viscosity standard, raw materials of the slurry are input through the inlet of the stirring tank to adjust viscosity of the slurry. In this way, online detection and stirring control are implemented.

In some examples, the controller is further connected to the stirring mechanism, and the controller is further configured to control operation of the stirring mechanism based on the viscosity parameter.

In this example, the controller is connected to the stirring mechanism, so that the controller adjusts an operation status of the stirring mechanism, allowing the stirring mechanism to stir the slurry. In this way, centralized control of a stirring process is implemented.

In some examples, the slurry processing apparatus further includes:
a memory electrically connected to the controller, where the memory is configured to store the viscosity parameter.

In this example, the memory is configured to store the viscosity parameter, so that parameter tracing and processing can be performed when needed.

This application further proposes a battery processing device based on the foregoing slurry processing apparatus. The battery processing device includes:
a slurry coating apparatus; and
the slurry processing apparatus according to any one of the foregoing examples, where the slurry processing apparatus is connected to the slurry coating apparatus through the output valve.

In this example, a slurry mixed by the slurry processing apparatus is output to the slurry coating apparatus, so that stirring and output of the slurry are implemented, and the viscosity monitoring assembly is used to monitor a viscosity parameter of the slurry, thereby facilitating control of the viscosity parameter of the slurry output to the slurry coating apparatus.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some of the embodiments of this application, and a person of ordinary skill in the art may still derive other drawings from the structures shown in these accompanying drawings without creative efforts.
FIG. 1 is a schematic structural diagram of an example of a slurry processing apparatus according to this application; and
FIG. 2 is a schematic diagram of a control system of an example of a slurry processing apparatus according to this application.

**Descriptions of reference numerals:**

| Reference numeral | Name | Reference numeral | Name |
|---|---|---|---|
| 10 | Slurry mixing assembly | 11 | Stirring tank |
| 111 | Inlet | 112 | Top wall |
| 113 | Bottom wall | 12 | Stirring mechanism |
| 13 | Controller | 20 | Viscosity monitoring assembly |
| 30 | Suction pump | 31 | First pipe |
| 32 | Second pipe | 40 | Output valve |
| 50 | Memory | | |

Objective achievement, functional features, and advantages of this application are further described with reference to the embodiments and the accompanying drawings.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application.

It should be noted that, if a directional indication (such as up, down, left, right, front, or back) is included in the embodiments of this application, the directional indication is only intended to explain a relative position relationship, a movement status, or the like between components in a specific attitude (as shown in the accompanying drawings), and if the specific attitude changes, the directional indication changes correspondingly.

In addition, if descriptions such as "first" and "second" are included in the embodiments of this application, the descriptions such as "first" and "second" are merely intended for a purpose of description, and shall not be construed as an indication or implication of relative importance or an implicit indication of the number of indicated technical features. Therefore, a feature defined by "first" or "second" may explicitly or implicitly include at least one such feature. In addition, technical solutions in various embodiments may be combined with each other, provided that the combination can be implemented by a person of ordinary skill in the art. When combined technical solutions are contradictory or the combination cannot be implemented, it should be considered that this combination of technical solutions does not exist, and does not fall within the protection scope claimed in this application.

"A plurality of" in the examples of this application means at least two (including two).

A slurry in the examples of this application is a mixture formed by mixing a solute and a solvent at a specific ratio, where types of the solute and the solvent and their respective percentages may be determined by a person skilled in the art based on specific application scenarios and functional needs.

Batteries are widely used in a variety of electric devices. Common electric devices include but are not limited to a mobile phone, a portable device, a notebook computer, an electric bicycle, an electric vehicle, a ship, a spacecraft, an electric toy, an electric tool, and the like. The batteries mentioned in the art may be classified into primary batteries and rechargeable batteries based on whether the batteries are rechargeable. Currently, common types of rechargeable batteries include lead-acid batteries, nickel-hydrogen batteries, and lithium-ion batteries.

The battery cell in the examples of this application may include a secondary ion battery, a primary ion battery, a lithium-sulfur battery, a sodium-lithium-ion battery, a sodium-ion battery, a magnesium-ion battery, or the like. This is not limited in the examples of this application. The battery cell may be in a cylindrical shape, a flat shape, a cuboid shape, or another shape. This is not limited in the examples of this application either. Battery cells are usually classified into three types based on a packaging method: a cylindrical battery cell, a prismatic battery cell, and a pouch battery cell. This is not limited in the examples of this application either.

The battery mentioned in the examples of this application is a single physical module that includes one or more battery cells for providing a higher voltage and capacity. For example, the battery mentioned in the examples of this application may include a battery module or a battery pack. A battery usually includes a box configured to enclose one or more battery cells or a plurality of battery modules. The box can prevent liquids or other foreign matter from affecting charging or discharging of the battery cell.

The battery cell includes a housing, an electrode assembly, and an electrolyte, where the housing is configured to accommodate the electrode assembly and the electrolyte. The electrode assembly includes a positive electrode plate, a negative electrode plate, and a separator. Operation of the battery cell mainly relies on migration of metal ions between the positive electrode plate and the negative electrode plate. The positive electrode plate includes a positive-electrode current collector and a positive-electrode active material layer. The positive-electrode active material layer is applied on a surface of the positive-electrode current collector. A part of the positive-electrode current collector uncoated with the positive-electrode active material layer protrudes out of a part of positive-electrode current collector coated with the positive-electrode active material layer and serves as a positive electrode tab. A lithium-ion battery is used as an example. The positive-electrode current collector may be made of aluminum, and the positive-electrode active material may be lithium cobaltate, lithium iron phosphate, ternary lithium, lithium manganate, or the like. The negative electrode plate includes a negative-electrode current collector and a negative-electrode active material layer. The negative-electrode active material layer is applied on a surface of the negative-electrode current collector. A part of negative-electrode current collector uncoated with the negative-electrode active material layer protrudes out of a part of negative-electrode current collector coated with the negative-electrode active material layer and serves as a negative electrode tab. The negative-electrode current collector may be made of copper, and the negative-electrode active material may be carbon, silicon, or the like. To allow a large current to pass through without any fusing, a plurality of positive electrode tabs are provided and stacked, and a plurality of negative electrode tabs are provided and stacked. The separator may be made of PP (polypropylene, polypropylene), PE (polyethylene, polyethylene), or the like. In addition, the electrode assembly may have a wound structure or a laminated structure. The examples of this application are not limited thereto.

The inventors have found through researches that, during processing of electrode plates of some battery cells, powder materials can be processed to form a slurry, and an electrode plate is formed through coating of the slurry. Viscosity of the slurry affects adhesion of the slurry on a current collector. Therefore, when a viscosity parameter of the slurry does not reach a preset standard, safe operation of the electrode plate may be affected.

In some cases, to monitor a viscosity parameter of a slurry, an operator needs to take out the slurry from a slurry tank, and then detect the viscosity parameter of the slurry outside the slurry tank. The slurry is affected by an external environment outside the stirring tank, leading to low detection accuracy for the slurry.

In view of low detection accuracy for a slurry, this application proposes a slurry processing apparatus. The slurry processing apparatus includes a mixing assembly, a viscosity monitoring assembly, and a controller. The mixing assembly mixes a solute and a solvent, the viscosity monitoring assembly detects viscosity of a slurry in the mixing assembly, and the controller receives an electrical signal obtained by the viscosity monitoring assembly, and controls operation of the mixing assembly. The slurry processing apparatus in this application detects a viscosity parameter of the slurry in the slurry mixing assembly, and controls an operation status of the slurry mixing assembly through the controller. In this way, automatic control on the viscosity parameter of the slurry is implemented, improving control accuracy for the viscosity parameter of the slurry and avoiding impact of an external environment on a detection process.

The slurry processing apparatus in this application may be used in a battery processing device to control a slurry processing process in the battery processing device, so as to output a slurry that meets a preset viscosity parameter requirement to a preset device. The battery processing device in this application may be a device for implementing a single process such as coating, or may be a battery processing production line.

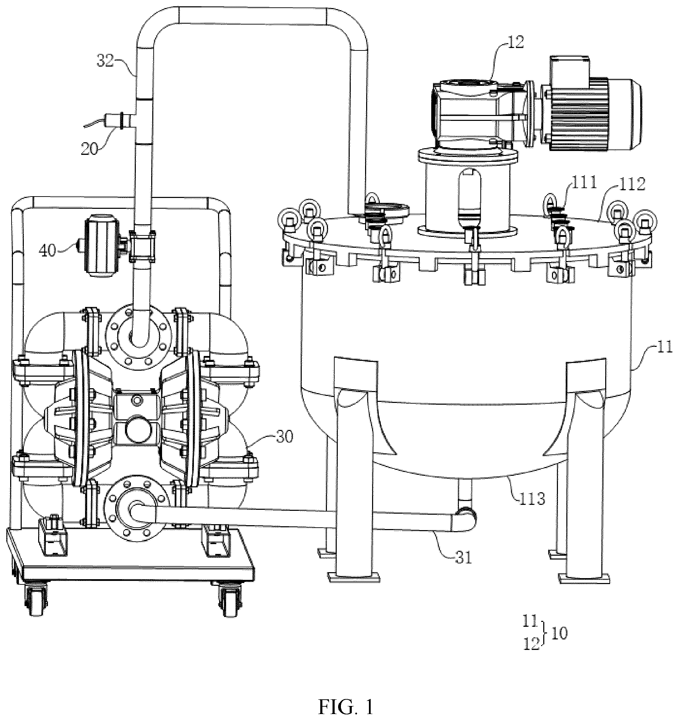

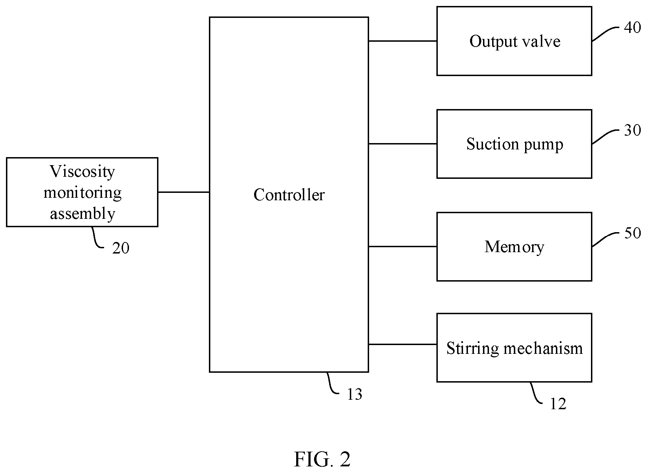

Refer to FIG. 1 and FIG. 2. In some examples, a slurry processing apparatus is disclosed, including a slurry mixing assembly 10, a viscosity monitoring assembly 20, a controller 13, and a suction pump 30. The slurry mixing assembly 10 is configured to mix a slurry. The viscosity monitoring assembly 20 is configured to monitor a viscosity parameter of the slurry in the slurry mixing assembly 10. The controller 13 is separately connected to the slurry mixing assembly 10 and the viscosity monitoring assembly 20, and the controller 13 is configured to receive the viscosity parameter and control operation of the slurry mixing assembly 10 based on the viscosity parameter. The suction pump 30 has an inlet 111, and the inlet 111 of the suction pump 30 is connected to the slurry mixing assembly 10 through a first pipe 31 for sucking the slurry in the slurry mixing assembly 10.

The slurry mixing assembly 10 is configured to perform mixing to form the slurry. The performing mixing to form the slurry means inputting a solvent and a solute required for forming the slurry to the slurry mixing assembly 10, so that the solute and the solvent are mixed to form the slurry. The slurry mixing assembly 10 is configured to mix raw materials such as the solute and the solvent, and the mixing includes stirring, shaking, or another process method capable of mixing the solute and the solvent. The slurry mixing assembly 10 has the inlet 111 for inputting raw materials, to implement input of the raw materials.

The viscosity monitoring assembly 20 is configured to monitor the viscosity parameter of the slurry to obtain a current viscosity parameter of the slurry. The viscosity parameter indicates current viscosity of the slurry. In this example, the viscosity parameter may be Engler viscosity. Engler viscosity refers to a ratio of time (s) required for 200 ml of liquid to flow through an Engler viscometer at specified temperature to time (s) required for distilled water of the same volume to flow through the Engler viscometer at 20°C. The viscosity parameter in this example may alternatively be another viscosity parameter that can characterize the slurry. The viscosity parameter obtained after the viscosity monitoring assembly 20 detects the viscosity of the slurry is a specific parameter value.

The controller 13 is separately connected to the slurry mixing assembly 10 and the viscosity monitoring assembly 20, so as to obtain the viscosity parameter monitored by the viscosity monitoring assembly 20. The controller 13 stores a preset parameter value. When the obtained viscosity parameter reaches the preset parameter value, it indicates that a current viscosity parameter of the slurry in the slurry mixing assembly 10 reaches the preset standard, and the controller 13 controls the slurry mixing assembly 10 to stop the slurry mixing operation, so that the slurry can be output to a next process.

Controlling, by the controller 13, operation of the slurry mixing assembly 10 based on the viscosity parameter means that: after the controller 13 obtains the viscosity parameter, when the viscosity parameter reaches the preset standard, the controller 13 can be triggered to transmit an electrical signal to the slurry mixing assembly 10, so that raw materials are input to the slurry mixing assembly 10, or the slurry mixing assembly 10 performs a mixing operation such as stirring on raw materials, or the slurry mixing assembly 10 performs a mixing operation such as stirring on the slurry while raw materials are input to the slurry mixing assembly 10, or the slurry mixing assembly 10 outputs the slurry to the outside of the slurry processing apparatus.

The first pipe 31 is connected to the slurry mixing assembly 10, so that the slurry in the slurry mixing assembly 10 can be output to the outside. The suction pump 30 is configured to form negative pressure in the first pipe 31, so as to suck the slurry out of the slurry mixing assembly 10. In some examples, the suction pump 30 is a diaphragm pump. The suction pump 30 may be configured to suck the slurry out of the slurry mixing assembly 10 and output the slurry to the outside of the slurry processing apparatus, and the suction pump 30 may also be configured to suck the slurry out of the slurry processing apparatus, so that the viscosity parameter of the slurry is monitored by the viscosity monitoring assembly 20. The first pipe 31 may be an external pipe connected between the suction pump 30 and the slurry mixing assembly 10, or may be a pipe located at an inlet of the suction pump 30 to allow the slurry to flow through.

In this example, the controller 13 is correspondingly provided with a trigger signal for implementing any one of the foregoing operations of the slurry mixing assembly 10, and the trigger signal may be a high-level signal or a low-level signal. A currently obtained viscosity parameter is in a one-to-one correspondence with an electrical signal in the controller. When the viscosity parameter falls within a preset range, the controller 13 transmits a corresponding electrical signal to the slurry mixing assembly accordingly, and the slurry mixing assembly 10 receives the corresponding electrical signal and then triggers the slurry mixing assembly 10 to perform a corresponding operation. For example, a preset parameter standard is prestored in the controller. When the viscosity parameter is equal to or higher than the preset parameter standard, the controller transmits a high-level signal to the slurry mixing assembly, and the slurry mixing assembly is triggered by the high-level signal to output the slurry to the outside. When the viscosity parameter is lower than the preset parameter standard, the controller transmits a low-level signal to the slurry mixing assembly, and then the slurry mixing assembly continues to stir the slurry or raw materials continue to be input to the slurry mixing assembly. In this example, equivalently, the controller transmits a trigger signal to a trigger apparatus of the slurry mixing assembly. When receiving a high-level signal, the trigger apparatus is triggered to output the slurry to the outside. When receiving a low-level signal, the slurry mixing assembly maintains a current mixing operation or raw materials are input to the slurry mixing assembly. The trigger apparatus may be a trigger switch, a trigger circuit, an integrated switch circuit switching apparatus, or the like.

In this example, when or after the slurry mixing assembly 10 mixes the slurry, viscosity of the slurry is monitored to obtain a current viscosity parameter of the slurry, and then the controller 13 determines whether the slurry in the slurry mixing assembly 10 reaches the preset standard based on whether the current viscosity parameter of the slurry reaches the preset standard, so as to determine operation of the slurry mixing assembly 10.

The slurry may be monitored by the viscosity monitoring assembly 20 to obtain the viscosity parameter of the slurry, and then operation of the slurry mixing assembly 10 is determined based on the viscosity parameter. In this way, real-time control and feedback of parameters during slurry mixing are implemented, to improve accuracy of a slurry output by the slurry processing apparatus. The controller 13 can implement online control on processing and viscosity of the slurry. This can effectively improve control efficiency during slurry processing and reduce uncertainty of detection accuracy caused by manual detection, and can also reduce costs of manual detection.

After the slurry is output by the slurry processing apparatus, the slurry may adsorb moisture or impurities in a surrounding environment. In this example, the viscosity monitoring assembly 20 is used to monitor the slurry in the slurry mixing assembly 10, and the slurry does not need to be taken out for detection. This avoids environmental interference on the slurry after the slurry leaves the slurry mixing assembly 10, and can reduce a possibility of contamination of the slurry taken out for detection. Therefore, accuracy of viscosity monitoring of the slurry can be improved.

In some examples, the controller 13 is integrated with the viscosity monitoring assembly 20, so that the viscosity monitoring assembly 20 and the controller 13 form an integrated structure. In some examples, the controller 13 is separated from the viscosity monitoring assembly 20, and the controller 13 may serve as a host or a control terminal for the slurry processing apparatus, to implement remote control on the slurry processing apparatus.

In some examples, an electrical signal is transmitted between the controller 13 and the slurry mixing assembly 10 and/or the viscosity monitoring assembly 20 through a wired or wireless connection.

In some examples, the viscosity monitoring assembly 20 may be a functional component, such as a viscosity sensor, used for monitoring the viscosity parameter of the slurry and outputting a detection parameter. In some examples, the controller 13 is a PLC or an integrated chip.

In some examples, the slurry processing apparatus further includes an output valve 40 connected to the slurry mixing assembly 10 for outputting the slurry in the slurry mixing assembly 10 to the outside of the slurry processing apparatus.

The output valve 40 is connected to the slurry mixing assembly 10, so that the slurry is output to the outside of the slurry mixing assembly 10 through the output valve 40 when needed.

In this example, the output valve 40 connected to the slurry mixing assembly 10 is disposed on the slurry processing apparatus, to control output of the slurry. In some examples, the output valve 40 is a solenoid valve or another valve capable of opening. In some examples, the output valve 40 is a three-way valve. When the slurry needs to be output to the outside of the slurry processing apparatus, the output valve 40 is connected to the slurry mixing assembly 10 and the outside of the slurry processing apparatus. When the slurry does not need to be output, the output valve 40 may be closed, or both an inlet 111 and an outlet of the output valve 40 are connected to the slurry mixing assembly 10 so that the slurry cannot be output to the outside of the slurry processing apparatus.

In some examples, the controller 13 is further connected to the output valve 40, and the controller 13 is further configured to control operation of the output valve 40 based on the viscosity parameter, allowing the output valve to output the slurry in the slurry mixing assembly 10 to the outside of the slurry processing apparatus.

In this example, that the controller 13 is connected to the output valve 40 means that the controller 13 is capable of transmitting a trigger electrical signal to the output valve 40, and the output valve 40 performs a valve plug switching operation when receiving the electrical signal.

In this example, that the controller 13 is connected to the output valve 40 may mean that the controller 13 and the output valve 40 are connected in a wired or wireless manner to implement transmission of an electrical signal.

That the controller 13 is further configured to control operation of the output valve 40 based on the viscosity parameter, allowing the output valve to output the slurry in the slurry mixing assembly 10 to the outside of the slurry processing apparatus means that the controller 13 receives the viscosity parameter, the controller 13 is triggered to transmit an electrical signal when the viscosity parameter reaches the preset standard, and the output valve 40 is triggered after receiving the electrical signal, so that a valve plug of the output valve is switched and the slurry is output to the outside of the slurry processing apparatus through the output valve 40. The electrical signal may be a low-level signal or a high-level signal.

In some examples, the viscosity monitoring assembly 20 is connected to the suction pump 30 and is configured to monitor a viscosity parameter of a slurry sucked by the suction pump 30.

That the viscosity monitoring assembly 20 is configured to monitor a viscosity parameter of a slurry sucked by the suction pump 30 means that the slurry is monitored after being sucked out of the slurry mixing assembly 10, so that the viscosity monitoring assembly 20 does not extend into the slurry mixing assembly 10.

In this example, the suction pump 30 is used to suck the slurry out of the slurry mixing assembly 10, and then viscosity of the sucked slurry is monitored to obtain the viscosity parameter. The suction pump 30 is used to take out the slurry for detection, and the slurry mixing assembly 10 does not need to be opened during detection. This can reduce contamination caused by impurities in an external environment entering the slurry mixing assembly 10.

In some examples, the viscosity monitoring assembly 20 is provided on the first pipe 31, so that the viscosity parameter of the slurry is monitored by the viscosity monitoring assembly 20 when the slurry is output through the first pipe 31.

In some examples, the viscosity monitoring assembly 20 is provided on the suction pump 30, so that the viscosity monitoring assembly 20 detects a slurry flowing into the suction pump 30.

In some examples, the suction pump 30 further has an outlet, and the outlet of the suction pump 30 is connected to the slurry mixing assembly 10 through a second pipe 32. The second pipe 32 is configured to convey the slurry sucked by the suction pump 30 back to the slurry mixing assembly 10. In this way, under the action of the suction pump 30, the slurry is re-conveyed to the slurry mixing assembly 10 after being output by the slurry mixing assembly 10, so as to reduce a waste of the slurry.

The slurry flows through the slurry mixing assembly 10, the first pipe 31, the suction pump 30, and the second pipe 32, and then re-enters the slurry mixing assembly 10, so that the slurry is circulated, and no slurry is output to the outside of the slurry processing apparatus during detection, thereby reducing a waste of the slurry. The slurry forms a closed cycle, and the slurry processing apparatus does not need to be opened, so that the slurry is not in contact with impurities in an external environment. This can improve quality of the slurry, and avoid impact of external impurities on accuracy of viscosity monitoring of the slurry.

**In** some examples, the viscosity monitoring assembly 20 is provided on the second pipe 32. The slurry is conveyed back to the slurry mixing assembly 10 through the second pipe 32 under the negative pressure of the suction pump 30. In this example, the viscosity monitoring assembly 20 is provided on the second pipe 32, so that the slurry can be monitored, and the slurry can be conveyed back to the slurry mixing assembly 10 after the detection is completed. When the viscosity parameter of the slurry reaches the preset standard, because the viscosity monitoring assembly 20 is located on a side of the outlet of the suction pump 30, a slurry in the suction pump 30 is a slurry that reaches the preset viscosity standard, so that the slurry can be output to the outside of the slurry processing apparatus through the suction pump 30, reducing a waste of the slurry in the pipe.

**In** some examples, the suction pump 30 has the outlet, and the output valve 40 is connected to the suction pump 30. The output valve 40 has a first connection position and a second connection position. When the output valve 40 is in the first connection position, the outlet of the suction pump 30 is connected to the slurry mixing assembly 10 through the output valve 40. When the output valve 40 is in the second connection position, the outlet of the suction pump 30 communicates with the outside of the slurry processing apparatus through the output valve 40.

**In** this example, that the output valve 40 has a first connection position and a second connection position means that the output valve 40 has at least two connection states, and the valve plug of the output valve 40 can switch between the at least two connection states. When the output valve 40 is in the first connection position, an internal pipe of the output valve 40 is connected to the outlet of the suction pump 30 and the slurry mixing assembly 10, so that the slurry is conveyed back to the slurry mixing assembly 10. When the output valve 40 is in the second connection position, the internal pipe of the output valve 40 is connected to the outlet of the suction pump 30 and the outside of the slurry processing apparatus, so that the slurry can be output to the outside of the slurry processing apparatus through the output valve 40.

That the suction pump 30 is connected to the output valve 40 means that the output valve 40 can control an open/closed state of the suction pump 30.

In some examples, the suction pump 30 is electrically connected to the controller 13. When the controller 13 is triggered by an electrical signal, the controller 13 controls the suction pump 30 to operate to suck the slurry, and the slurry is output to the outside of the slurry processing apparatus through the output valve 40.

Switching of the output valve 40 between the first connection position and the second connection position may be driven by an electrical signal or in a mechanical manner. For example, the output valve 40 is driven by an electrical signal. The output valve 40 may be electrically connected to the controller 13, and operation of the output valve 40 is driven by the controller 13. When receiving the viscosity parameter monitored by the viscosity monitoring assembly 20, the controller 13 compares the viscosity parameter with the preset viscosity standard. When the current viscosity parameter does not reach the preset viscosity parameter standard, the output valve 40 is in the first connection position. In this example, the controller 13 may transmit an electrical signal to the output valve 40, so that the output valve 40 remains in the first connection position and the slurry is conveyed back to the slurry mixing assembly 10. When the current viscosity parameter reaches the preset viscosity parameter standard, the controller 13 transmits an electrical signal to drive the output valve 40 to switch to the second connection position, so that the slurry can be output to the outside of the slurry processing apparatus.

In this example, the controller 13 controls the suction pump 30 and the output valve 40. In this way, when the viscosity parameter of the slurry reaches the preset standard, the slurry is directly sucked through the suction pump 30 and output to the outside of the slurry processing apparatus through the output valve 40, without an additional suction apparatus.

In some examples, the slurry mixing assembly 10 has a top wall 112, and an end of the second pipe 32 away from the outlet of the suction pump 30 is connected to the top wall 112 of the slurry mixing assembly 10.

That the slurry mixing assembly 10 has a top wall 112 means that the top wall 112 is provided at an upper end of the slurry mixing assembly 10, and the top wall 112 has an inner surface facing the slurry in the slurry mixing assembly 10 and an outer surface backing from the slurry.

That an end of the second pipe 32 away from the suction pump 30 is connected to the top wall 112 of the slurry mixing assembly 10 means that the end of the second pipe 32 away from the suction pump 30 can be connected to the inside of the slurry mixing assembly 10 through the top wall 112, so that a slurry in the second pipe 32 can flow into the slurry mixing assembly 10 through the top wall 112.

The second pipe 32 is connected to the top wall 112. When a slurry is input, the slurry reflows to the slurry mixing assembly 10 from the top down, and the reflowing slurry can be re-mixed into the slurry in the slurry mixing assembly 10 under the action of gravity, so that the slurry can be quickly mixed.

The second pipe 32 is connected to the top wall 112, and during pipe arrangement, the second pipe 32 is provided above the suction pump 30, and the second pipe 32 is connected to the slurry mixing assembly 10 from above, so as to fully utilize space above the suction pump 30. In some examples, the second pipe 32 is a stainless steel pipe or another rigid pipe, facilitating mounting of the viscosity monitoring assembly 20 on the second pipe 32.

In some examples, the slurry mixing assembly 10 has a bottom wall 113, and an end of the first pipe 31 away from the inlet 111 of the suction pump 30 is connected to the bottom wall 113 of the slurry mixing assembly 10.

That the slurry mixing assembly 10 has a bottom wall 113 means that the bottom wall 113 is provided at a lower end of the slurry mixing assembly 10, and the bottom wall 113 has an inner surface facing the slurry in the slurry mixing assembly 10 and an outer surface backing from the slurry.

That an end of the first pipe 31 away from the suction pump 30 is connected to the bottom wall 113 of the slurry mixing assembly 10 means that the end of the first pipe 31 away from the suction pump 30 is connected to the slurry mixing assembly 10 through the bottom wall 113, so that the slurry can flow to the suction pump 30 through the first pipe 31.

In this example, the first pipe 31 is connected to the bottom wall 113. During operation of the suction pump 30, negative pressure is formed in the first pipe 31, and the slurry flows in a direction toward the suction pump 30 under the action of the negative pressure and gravity, so that the slurry is quickly output.

In this example, the first pipe 31 may be a hose, to facilitate disposition of the first pipe 31 and fully utilize space under the slurry mixing assembly 10 and the suction pump 30.

In some examples, the slurry mixing assembly 10 includes a stirring tank 11 and a stirring mechanism 12. The stirring tank 11 is configured to accommodate the slurry, and the stirring tank 11 has an inlet 111 for inputting raw materials. The stirring mechanism 12 is provided in the stirring tank 11 and configured to stir the slurry in the stirring tank 11. The viscosity monitoring assembly 20 is configured to monitor a viscosity parameter of a slurry in the stirring tank 11. The controller 13 is electrically connected to the stirring tank 11, and the controller controls an opening of the inlet of the stirring tank 11 based on the viscosity parameter.

The stirring tank 11 has an inner cavity for accommodating the slurry. The stirring mechanism 12 is configured to stir the slurry in the stirring tank 11 to fully mix raw materials of the slurry.

That the controller 13 is electrically connected to the stirring tank 11 means that the controller 13 is capable of transmitting an electrical signal to the stirring tank 11 to trigger an opening adjustment for the inlet 111 of the stirring tank 11. The opening adjustment for the inlet means opening, closing, or partially opening the inlet.

That the viscosity monitoring assembly 20 is configured to monitor viscosity of a slurry in the stirring tank 11 means that, after the slurry is stirred in the stirring tank 11, the viscosity monitoring assembly 20 detects viscosity of the stirred slurry to obtain the viscosity parameter.

When raw materials of the slurry need to be input, the controller 13 transmits an electrical signal to the inlet 111 of the stirring tank 11 to drive the inlet 111 of the stirring tank 11 to open, the raw materials enter the inner cavity of the stirring tank 11, and the stirring mechanism 12 stirs the raw materials. The viscosity monitoring assembly 20 detects viscosity of the stirred slurry. When the viscosity monitoring assembly 20 detects that a viscosity parameter of current slurry in the stirring tank 11 reaches the preset viscosity standard, the slurry may be output to a next process. When the viscosity monitoring assembly 20 detects that the viscosity parameter of the current slurry in the stirring tank 11 does not reach the preset viscosity standard, the controller 13 controls the inlet 111 of the stirring tank 11 to be open or partially open for inputting a solvent or a solute to adjust viscosity of the slurry.

In this example, the stirring mechanism 12 is configured to mix the slurry. In some examples, the stirring mechanism 12 may include a blade, a stirring shaft, and a motor. The blade is mounted on the stirring shaft, and the motor is used to drive the stirring shaft to rotate, so as to implement a stirring operation on the slurry.

In some examples, the controller 13 is further connected to the stirring mechanism 12, and the controller 13 is further configured to control operation of the stirring mechanism based on the viscosity parameter.

That the controller 13 is connected to the stirring mechanism 12 means that the controller 13 is capable of transmitting an electrical signal to the stirring mechanism 12, to trigger the stirring mechanism 12 to operate or stop through the electrical signal. In this way, an operation status of the stirring mechanism 12 is controlled.

In this example, the controller 13 is connected to the stirring mechanism 12, so that whether raw materials need to be further input can be determined based on the viscosity parameter monitored by the viscosity monitoring assembly 20. When raw materials need to be input, after the slurry enters the stirring tank 11, the controller 13 transmits an electrical signal to the stirring mechanism 12, to trigger the stirring mechanism 12 to operate and perform a stirring operation on a mixture.

In some examples, the slurry processing apparatus further includes a memory electrically connected to the controller 13, where the memory is configured to store the viscosity parameter.

The memory can be configured to store viscosity parameter information. The viscosity parameter information is stored in the memory, and therefore can be subsequently reviewed to determine viscosity of a slurry output in each process. This facilitates review of product quality.

This application further proposes an example of a battery processing device based on the foregoing slurry processing apparatus.

The battery processing device includes a slurry coating apparatus and the slurry processing apparatus according to any one of the foregoing examples, where the slurry processing apparatus is connected to the slurry coating apparatus through the output valve 40.

In this example, the slurry coating apparatus is configured to apply a slurry, to implement processing of parts required by a battery. A viscosity parameter of the slurry can be monitored by the viscosity monitoring assembly 20. Before coating of the slurry, the slurry may be conveyed to the slurry coating apparatus when it is determined that the viscosity parameter of the slurry reaches a preset viscosity standard. This can effectively improve control accuracy for the viscosity parameter of the slurry, and improve product quality.

It should be noted that the example of the battery processing device in this application is based on the examples of the slurry processing apparatus. Therefore the example of the battery processing device in this application includes all the technical solutions in all the examples of the slurry processing apparatus, and achieve exactly the same technical effects. Details are not described herein again.

Refer to FIG. 1 and FIG. 2. In some examples, a slurry processing apparatus is disclosed, including a slurry mixing assembly 10, a viscosity monitoring assembly 20, and a controller 13. The slurry mixing assembly 10 mixes a slurry evenly, where the mixing may be stirring, shaking, or the like. The viscosity monitoring assembly 20 is configured to monitor viscosity of the slurry. The controller 13 obtains a viscosity parameter of the slurry monitored by the slurry monitoring assembly. When a current slurry viscosity parameter reaches or exceeds the preset viscosity parameter, the controller 13 transmits an electrical signal to the slurry mixing apparatus to drive an operation status of the slurry mixing apparatus. The operation status includes mixing stopped, slurry being output, or the like. In this example, a suction pump 30 is disposed outside the slurry mixing assembly 10 to suck a slurry out of the slurry mixing assembly 10, the viscosity monitoring assembly 20 detects a viscosity parameter of the slurry, and the slurry is conveyed back to the slurry mixing assembly 10 after the detection. When the monitored viscosity parameter of the slurry reaches the preset viscosity parameter, the controller 13 transmits a drive signal to the output valve 40 disposed on an output side of the suction pump 30, so that the output valve 40 can be used to output the slurry for subsequent processes such as coating. When the viscosity parameter of the slurry does not reach the preset viscosity standard, the controller 13 transmits a drive signal to the output valve 40 on the output side of the suction pump 30, so that the output valve 40 is connected to the slurry mixing assembly 10 to convey the slurry back to the slurry mixing assembly 10, and the slurry is mixed again, reducing a waste of the slurry.

The foregoing descriptions are merely some optional examples of this application, but are not intended to limit the patent scope of this application.

## Claims

1. A slurry processing apparatus, comprising:
a slurry mixing assembly (10), configured to mix a slurry;
a viscosity monitoring assembly (20), configured to monitor a viscosity parameter of the slurry in the slurry mixing assembly (10);
a controller (13), separately connected to the slurry mixing assembly (10) and the viscosity monitoring assembly (20), and configured to receive the viscosity parameter and control operation of the slurry mixing assembly (10) based on the viscosity parameter; and
a suction pump (30), wherein the suction pump (30) has an inlet, and the inlet of the suction pump (30) is connected to the slurry mixing assembly (10) through a first pipe (31) for sucking the slurry in the slurry mixing assembly (10);
wherein the viscosity monitoring assembly (20) is connected to the suction pump (30) and is configured to monitor a viscosity parameter of a slurry sucked by the suction pump (30);
wherein the suction pump (30) further has an outlet, and the outlet of the suction pump (30) is connected to the slurry mixing assembly (10) through a second pipe (32); and
wherein the slurry mixing assembly (10) has a top wall (112), and the second pipe (32) is provided above the suction pump (30),
**characterized in that** an end of the second pipe (32) away from the outlet of the suction pump (30) is connected to the top wall (112) of the slurry mixing assembly (10) and that the second pipe (32) is connected to the slurry mixing assembly (10) from above.

2. The slurry processing apparatus according to claim 1, wherein the viscosity monitoring assembly (20) is provided on the second pipe (32).

3. The slurry processing apparatus according to any one of claims 1 to 2, wherein the slurry processing apparatus further comprises:
an output valve (40), connected to the slurry mixing assembly (10) for outputting the slurry in the slurry mixing assembly (10) to the outside of the slurry processing apparatus.

4. The slurry processing apparatus according to claim 3, wherein the controller (13) is further connected to the output valve (40), and the controller (13) is further configured to control operation of the output valve (40) based on the viscosity parameter, so that the output valve (40) outputs the slurry in the slurry mixing assembly (10) to the outside of the slurry processing apparatus.

5. The slurry processing apparatus according to claim 3 or 4, wherein the suction pump (30) further has the outlet, and the output valve (40) is connected to the suction pump (30); and
the output valve (40) has a first connection position and a second connection position, and when the output valve (40) is in the first connection position, the outlet of the suction pump (30) is connected to the slurry mixing assembly (10) through the output valve (40), or when the output valve (40) is in the second connection position, the outlet of the suction pump (30) communicates with the outside of the slurry processing apparatus through the output valve (40).

6. The slurry processing apparatus according to any one of claims 1 to 5, wherein the slurry mixing assembly (10) has a bottom wall (113), and an end of the first pipe (31) away from the inlet of the suction pump (30) is connected to the bottom wall (113) of the slurry mixing assembly (10).

7. The slurry processing apparatus according to any one of claims 1 to 6, wherein the slurry mixing assembly (10) comprises:
a stirring tank (11), configured to accommodate a slurry, wherein the stirring tank (11) has an inlet (111); and
a stirring mechanism (12), provided in the stirring tank (11) and configured to stir the slurry in the stirring tank (11), wherein
the viscosity monitoring assembly (20) is configured to monitor a viscosity parameter of the slurry in the stirring tank (11), the controller (13) is electrically connected to the stirring tank (11), and the controller (13) controls an opening of the inlet (111) of the stirring tank (11) based on the viscosity parameter.

8. The slurry processing apparatus according to claim 7, wherein the controller (13) is further connected to the stirring mechanism (12), and the controller (13) is further configured to control operation of the stirring mechanism (12) based on the viscosity parameter.

9. The slurry processing apparatus according to any one of claims 1 to 8, wherein the slurry processing apparatus further comprises:
a memory (50) electrically connected to the controller (13), wherein the memory (50) is configured to store the viscosity parameter.

10. A battery processing device, comprising:
a slurry coating apparatus; and
the slurry processing apparatus according to any one of claims 1 to 9, wherein the slurry processing apparatus is connected to the slurry coating apparatus.

## Patentansprüche

1. Pastenverarbeitungsvorrichtung, umfassend:
eine Pastenmischanordnung (10), die dazu ausgelegt ist, eine Paste zu mischen;
eine Viskositätsüberwachungsanordnung (20), die dazu ausgelegt ist, einen Viskositätsparameter der Paste in der Pastenmischanordnung (10) zu überwachen;
eine Steuerung (13), die separat mit der Pastenmischanordnung (10) und der Viskositätsüberwachungsanordnung (20) verbunden und dazu ausgelegt ist, den Viskositätsparameter zu empfangen und den Betrieb der Pastenmischanordnung (10) basierend auf dem Viskositätsparameter zu steuern; und
eine Saugpumpe (30), wobei die Saugpumpe (30) einen Einlass aufweist und der Einlass der Saugpumpe (30) durch ein erstes Rohr (31) mit der Pastenmischanordnung (10) verbunden ist, um die Paste in die Pastenmischanordnung (10) zu saugen;
wobei die Viskositätsüberwachungsanordnung (20) mit der Saugpumpe (30) verbunden und dazu ausgelegt ist, einen Viskositätsparameter einer von der Saugpumpe (30) angesaugten Paste zu überwachen;
wobei die Saugpumpe (30) ferner einen Auslass aufweist und wobei der Auslass der Saugpumpe (30) durch ein zweites Rohr (32) mit der Pastenmischanordnung (10) verbunden ist; und
wobei die Pastenmischanordnung (10) eine obere Wand (112) aufweist und das zweite Rohr (32) über der Saugpumpe (30) vorgesehen ist, **dadurch gekennzeichnet, dass** ein vom Auslass der Saugpumpe (30) entferntes Ende des zweiten Rohrs (32) mit der oberen Wand (112) der Pastenmischanordnung (10) verbunden ist und dass das zweite Rohr (32) von oben mit der Pastenmischanordnung (10) verbunden ist.

2. Pastenverarbeitungsvorrichtung nach Anspruch 1, wobei die Viskositätsüberwachungsanordnung (20) am zweiten Rohr (32) vorgesehen ist.

3. Pastenverarbeitungsvorrichtung nach einem der Ansprüche 1 bis 2, wobei die Pastenverarbeitungsvorrichtung ferner Folgendes umfasst:
ein Ausgangsventil (40), das mit der Pastenmischanordnung (10) verbunden ist, um die Paste in der Pastenmischanordnung (10) nach außerhalb der Pastenverarbeitungsvorrichtung abzugeben.

4. Pastenverarbeitungsvorrichtung nach Anspruch 3, wobei die Steuerung (13) ferner mit dem Ausgangsventil (40) verbunden ist und wobei die Steuerung (13) ferner dazu ausgelegt ist, den Betrieb des Ausgangsventils (40) basierend auf dem Viskositätsparameter zu steuern, sodass das Ausgangsventil (40) die Paste in der Pastenmischanordnung (10) nach außerhalb der Pastenverarbeitungsvorrichtung abgibt.

5. Pastenverarbeitungsvorrichtung nach Anspruch 3 oder 4, wobei die Saugpumpe (30) ferner den Auslass aufweist und das Ausgangsventil (40) mit der Saugpumpe (30) verbunden ist und wobei das Ausgangsventil (40) eine erste Verbindungsposition und eine zweite Verbindungsposition aufweist und, wenn sich das Ausgangsventil (40) in der ersten Verbindungsposition befindet, der Auslass der Saugpumpe (30) durch das Ausgangsventil (40) mit der Pastenmischanordnung (10) verbunden ist, oder, wenn sich das Ausgangsventil (40) in der zweiten Verbindungsposition befindet, der Auslass der Saugpumpe (30) durch das Ausgangsventil (40) mit dem Äußeren der Pastenverarbeitungsvorrichtung kommuniziert.

6. Pastenverarbeitungsvorrichtung nach einem der Ansprüche 1 bis 5, wobei die Pastenmischanordnung (10) eine Bodenwand (113) aufweist und ein vom Einlass de Saugpumpe (30) entferntes Ende des ersten Rohrs (31) mit der Bodenwand (113) der Pastenmischanordnung (10) verbunden ist.

7. Pastenverarbeitungsvorrichtung nach einem der Ansprüche 1 bis 6, wobei die Pastenmischanordnung (10) Folgendes umfasst:
einen Rührtank (11), der dazu ausgelegt ist, eine Paste aufzunehmen, wobei der Rührtank (11) einen Einlass (111) aufweist; und
einen Rührmechanismus (12), der in dem Rührtank (11) vorgesehen und dazu ausgelegt ist, die Paste in dem Rührtank (11) zu rühren, wobei
die Viskositätsüberwachungsanordnung (20) dazu ausgelegt ist, einen Viskositätsparameter in der Paste in dem Rührtank (11) zu überwachen, wobei die Steuerung (13) mit dem Rührtank (11) elektrisch verbunden ist und wobei die Steuerung (13) eine Öffnung des Einlasses (111) des Rührtanks (11) basierend auf dem Viskositätsparameter steuert.

8. Pastenverarbeitungsvorrichtung nach Anspruch 7, wobei die Steuerung (13) ferner mit dem Rührmechanismus (12) verbunden ist und die Steuerung (13) ferner dazu ausgelegt ist, den Betrieb des Rührmechanismus (12) basierend auf dem Viskositätsparameter zu steuern.

9. Pastenverarbeitungsvorrichtung nach einem der Ansprüche 1 bis 8, wobei die Pastenverarbeitungsvorrichtung ferner Folgendes umfasst:
einen Speicher (50), der mit der Steuerung (13) elektrisch verbunden ist, wobei der Speicher (50) dazu ausgelegt ist, den Viskositätsparameter zu speichern.

10. Batterieverarbeitungsvorrichtung, umfassend:
eine Pastenbeschichtungsvorrichtung und
die Pastenverarbeitungsvorrichtung nach einem der Ansprüche 1 bis 9, wobei die Pastenverarbeitungsvorrichtung mit der Pastenbeschichtungsvorrichtung verbunden ist.

## Revendications

1. Appareil de traitement de suspension, comprenant :
un ensemble de mélange de suspension (10), conçu pour mélanger une suspension ;
un ensemble de surveillance de viscosité (20), conçu pour surveiller un paramètre de viscosité de la suspension dans l'ensemble de mélange de suspension (10) ;
un dispositif de commande (13), connecté séparément à l'ensemble de mélange de suspension (10) et à l'ensemble de surveillance de viscosité (20), et conçu pour recevoir le paramètre de viscosité et commander le fonctionnement de l'ensemble de mélange de suspension (10) sur la base du paramètre de viscosité ; et
une pompe d'aspiration (30), la pompe d'aspiration (30) comportant une entrée, et l'entrée de la pompe d'aspiration (30) étant reliée à l'ensemble de mélange de suspension (10) par l'intermédiaire d'un premier tuyau (31) pour aspirer la suspension dans l'ensemble de mélange de suspension (10) ;
l'ensemble de surveillance de viscosité (20) étant connecté à la pompe d'aspiration (30) et étant conçu pour surveiller un paramètre de viscosité d'une suspension aspirée par la pompe d'aspiration (30) ;
la pompe d'aspiration (30) comportant en outre une sortie, et la sortie de la pompe d'aspiration (30) étant reliée à l'ensemble de mélange de suspension (10) par l'intermédiaire d'un second tuyau (32) ; et
l'ensemble de mélange de suspension (10) comportant une paroi supérieure (112), et le second tuyau (32) étant situé au-dessus de la pompe d'aspiration (30), **caractérisé en ce qu'**une extrémité du second tuyau (32) éloignée de la sortie de la pompe d'aspiration (30) est reliée à la paroi supérieure (112) de l'ensemble de mélange de suspension (10) et **en ce que** le second tuyau (32) est relié à l'ensemble de mélange de suspension (10) par le dessus.

2. Appareil de traitement de suspension selon la revendication 1, l'ensemble de surveillance de viscosité (20) étant situé sur le second tuyau (32).

3. Appareil de traitement de suspension selon l'une quelconque des revendications 1 à 2, l'appareil de traitement de suspension comprenant en outre :
une vanne de sortie (40), reliée à l'ensemble de mélange de suspension (10) pour délivrer en sortie la suspension dans l'ensemble de mélange de suspension (10) vers l'extérieur de l'appareil de traitement de suspension.

4. Appareil de traitement de suspension selon la revendication 3, le dispositif de commande (13) étant en outre connecté à la vanne de sortie (40), et le dispositif de commande (13) étant en outre conçu pour commander le fonctionnement de la vanne de sortie (40) sur la base du paramètre de viscosité, de sorte que la vanne de sortie (40) délivre en sortie la suspension dans l'ensemble de mélange de suspension (10) à l'extérieur de l'appareil de traitement de suspension.

5. Appareil de traitement de suspension selon la revendication 3 ou 4, la pompe d'aspiration (30) comportant en outre la sortie, et la vanne de sortie (40) étant reliée à la pompe d'aspiration (30) ; et
la vanne de sortie (40) présentant une première position de liaison et une seconde position de liaison, et lorsque la vanne de sortie (40) est dans la première position de liaison, la sortie de la pompe d'aspiration (30) étant reliée à l'ensemble de mélange de suspension (10) par l'intermédiaire de la vanne de sortie (40), ou lorsque la vanne de sortie (40) est dans la seconde position de liaison, la sortie de la pompe d'aspiration (30) communiquant avec l'extérieur de l'appareil de traitement de suspension par l'intermédiaire de la vanne de sortie (40).

6. Appareil de traitement de suspension selon l'une quelconque des revendications 1 à 5, l'ensemble de mélange de suspension (10) comportant une paroi inférieure (113), et une extrémité du premier tuyau (31) éloignée de l'entrée de la pompe d'aspiration (30) étant reliée à la paroi inférieure (113) de l'ensemble de mélange de suspension (10).

7. Appareil de traitement de suspension selon l'une quelconque des revendications 1 à 6, l'ensemble de mélange de suspension (10) comprenant :
une cuve d'agitation (11), conçue pour recevoir une suspension, la cuve d'agitation (11) comportant une entrée (111) ; et
un mécanisme d'agitation (12), situé dans le réservoir d'agitation (11) et conçu pour agiter la suspension dans le réservoir d'agitation (11),
l'ensemble de surveillance de viscosité (20) étant conçu pour surveiller un paramètre de viscosité de la suspension dans le réservoir d'agitation (11), le dispositif de commande (13) étant connecté électriquement au réservoir d'agitation (11), et le dispositif de commande (13) commandant une ouverture de l'entrée (111) du réservoir d'agitation (11) sur la base du paramètre de viscosité.

8. Appareil de traitement de suspension selon la revendication 7, le dispositif de commande (13) étant en outre connecté au mécanisme d'agitation (12), et le dispositif de commande (13) étant en outre conçu pour commander le fonctionnement du mécanisme d'agitation (12) sur la base du paramètre de viscosité.

9. Appareil de traitement de suspension selon l'une quelconque des revendications 1 à 8, l'appareil de traitement de suspension comprenant en outre :
une mémoire (50) connectée électriquement au dispositif de commande (13), la mémoire (50) étant conçue pour stocker le paramètre de viscosité.

10. Dispositif de traitement de batterie, comprenant :
un appareil de revêtement de suspension ; et
l'appareil de traitement de suspension selon l'une quelconque des revendications 1 à 9, l'appareil de traitement de suspension étant relié à l'appareil de revêtement de suspension.
